# EUROPÄISCHE PATENTANMELDUNG

(11) **EP 1 782 968 A2**
(43) Veröffentlichungstag der Anmeldung: **09.05.2007**
(21) Anmeldenummer: 06121088.6
(22) Anmeldetag: 22.09.2006
(51) Int. Cl.: B60C 9/20, B60C 9/22

(54) **Fahrzeugluftreifen**

(30) Priorität: 28.10.2005 DE 102005051683
(71) Anmelder: Continental Aktiengesellschaft, 30165 Hannover (DE)
(72) Erfinder: Wajroch, Mike, 30926 Letter (DE); Seng, Matthias, 30449 Hannover (DE)

(57) **Zusammenfassung**

Die Erfindung betrifft einen Fahrzeugluftreifen mit einem Laufstreifen (1), einer Radialkarkasse (3), Wulstkernen (7) mit Kernprofilen (8), Seitenwänden (6), einem mehrlagigen Gürtel (2) und einer die radial äußerste Gürtellage (2b) abdeckenden, spiralig gewickelten Gürtelbandage (5), einer luftdichten Innenschicht (4) und mit sich über die Schulterbereiche erstreckenden Verstärkungsstreifen (10).

Um die Quer- und die Längssteifigkeit des Reifens zu verbessern, sind die Verstärkungsstreifen (10) über die Schulterbereiche hinaus verlaufend angeordnet und enden im Bereich des Laufstreifens (1) in einem vom jeweiligen Laufstreifenrand gemessen Abstand (a) von bis zu 25 % der Laufstreifenbreite (B) und im Bereich der Seitenwände (6) in einer Höhe (h) von 50 bis 60 % der Querschnittshöhe (H) des Reifens.

## Beschreibung

Die Erfindung betrifft einen Fahrzeugluftreifen mit einem Laufstreifen, einer Radialkarkasse, Wulstkernen mit Kernprofilen, Seitenwänden, einem mehrlagigen Gürtel und einer die radial äußerste Gürtellage abdeckenden, spiralig gewickelten Gürtelbandage, einer luftdichten Innenschicht und mit sich über die Schulterbereiche erstreckenden Verstärkungsstreifen.

Ein derartiger Fahrzeugluftreifen ist beispielsweise aus der DE 40 19 316 A1 bekannt. Dieser Fahrzeugluftreifen weist in den Schulterbereichen an den Übergangsstellen zwischen der jeweiligen Reifenseitenwand und dem Laufstreifen je einen Abdeckgummi auf, wobei sich zwischen diesem und der Karkasse zumindest ein zusätzlicher Gewebestreifen befindet, welcher den Reifen, auch in schwierigen Fahrsituationen, insbesondere beim Bordsteinfahren, vor Schäden bewahren soll. Der Gewebestreifen reicht radial außen zumindest bis zum axial äußeren Rand der radial inneren Gürtellage und endet radial innen höchstens 2 mm vor der Abdeckgummispitze. Die Gewebestreifen sind relativ schmal ausgeführt und ihre Erstreckung ist daher auf die Reifenschultern beschränkt.

Es ist eine Anzahl weiterer Vorschläge zur Verstärkung der Schulterbereiche von Reifen mit Verstärkungsstreifen bekannt. Aus der DE 196 49 507 C1 ist es beispielsweise bekannt, im Bereich der Gürtelränder einen Bandagestreifen mit in Umfangsrichtung ausgerichteten Festigkeitsträgern und unterhalb dieses Bandagestreifens einen zweiten Bandagestreifen anzuordnen, welcher sich ebenfalls über den Gürtelrand hinaus erstreckt. Bei dem aus der DE 28 47 926 A bekannten Fahrzeugluftreifen sind die Ränder des Gürtels bandagenartig von Bändern umschlossen, die eine Breite von etwa einem Achtel bis einem Fünftel der Breite des Gürtels aufweisen und nach Art eines Vollgewebes ausgeführte Verstärkungsfäden enthalten. Diese Verstärkungsstreifen sollen vor Allem im Bereich der Gürtelränder Ablösungserscheinungen vermeiden.

Der Erfindung liegt die Aufgabe zugrunde, einen Reifen der eingangs genannten Art derart auszuführen, dass seine Quer- und Längssteifigkeit, seine Fahreigenschaften sowie die Bremseigenschaften verbessert sind.

Gelöst wird die gestellte Aufgabe erfindungsgemäß dadurch, dass die Verstärkungsstreifen über die Schulterbereiche hinaus verlaufend angeordnet sind und im Bereich des Laufstreifens in einem vom jeweiligen Laufstreifenrand gemessenen Abstand von bis zu 25 % der Laufstreifenbreite und im Bereich der Seitenwände in einer Höhe von 50 bis 60 % der Querschnittshöhe des Reifens enden.

Gemäß der Erfindung erstrecken sich daher die Verstärkungsstreifen über einen relativ großen Bereich und sind daher vergleichsweise breit ausgeführt. Die Verstärkungsstreifen versteifen somit den Reifen nicht nur in den Schultern sondern auch in den oberen Seitenwandbereichen, wodurch die Quer- und die Längssteifigkeit des Reifens positiv beeinflusst werden. Die Erhöhung der Quer- und Längssteifigkeit hat günstige Auswirkungen auf die Fahreigenschaften sowie die Bremseigenschaften des Reifens.

Für die erwünschte Verbesserung der Quer- und Längssteifigkeit des Reifens ist es ferner günstig, wenn die Verstärkungsstreifen im Bereich des Laufstreifens in einem vom jeweiligen Laufstreifenrand gemessenen Abstand von mindestens 10 % der Laufstreifenbreite enden.

Es gibt eine Anzahl von Möglichkeiten, die Verstärkungsstreifen im Reifen anzuordnen. Da es vorrangig darum geht, den Unterbau des Reifens zu versteifen, sind einige dieser Möglichkeiten besonders vorteilhaft. Zu den besonders günstigen Varianten gehört es, die Verstärkungsstreifen radial außenseitig und entlang der Bandage und der Karkasse verlaufend anzuordnen. Alternativ dazu können die Verstärkungsstreifen radial außenseitig und entlang der Bandage und der Seitenwand verlaufend angeordnet werden. Bei einer weiteren Ausführungsvariante der Erfindung werden die Verstärkungsstreifen radial außenseitig und entlang der Innenschicht verlaufend oder radial außenseitig und entlang der Karkasse verlaufend angeordnet.

Die Verstärkungsstreifen können aus einem gummierten Gewebe aus textilen Faserkorden, beispielsweise aus Nylon, Rayon oder Polyester, oder aus einem faserverstärkten Gummi, welcher Fasern aus den erwähnten Materialien enthält, bestehen. Auf diese Weise lässt sich eine Quer- und Längsversteifung des Reifens erzielen, die wenig Einfluss auf das Gewicht des Reifens nimmt.

Falls die Verstärkungsstreifen aus einem faserverstärkten Gummi bestehen, so wird der Anteil an Fasern vorzugsweise zwischen 10 und 30 Gewichtsteilen, bezogen auf 100 Gewichtsteile Kautschuk in der Mischung, gewählt.

Weitere Merkmale, Vorteile und Einzelheiten der Erfindung werden nun anhand der Zeichnung, die schematisch einige Ausführungsbeispiele dargestellt, näher beschrieben. Dabei zeigen

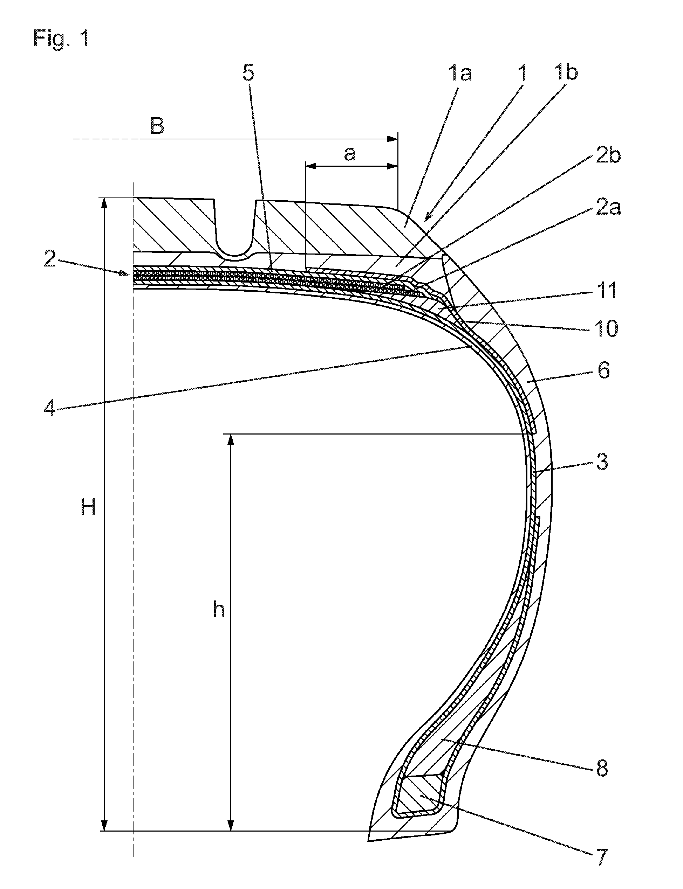

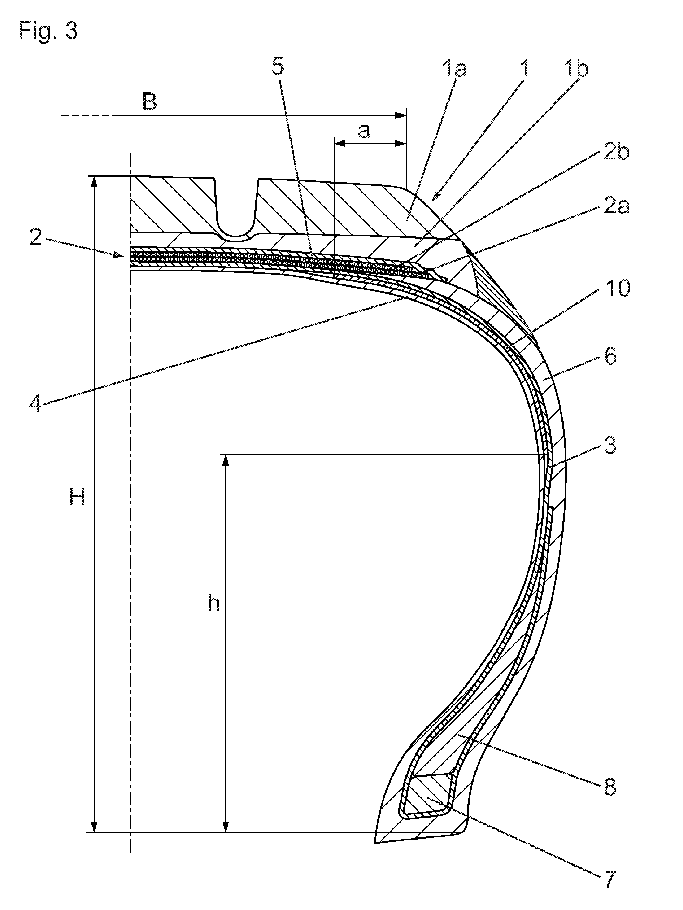

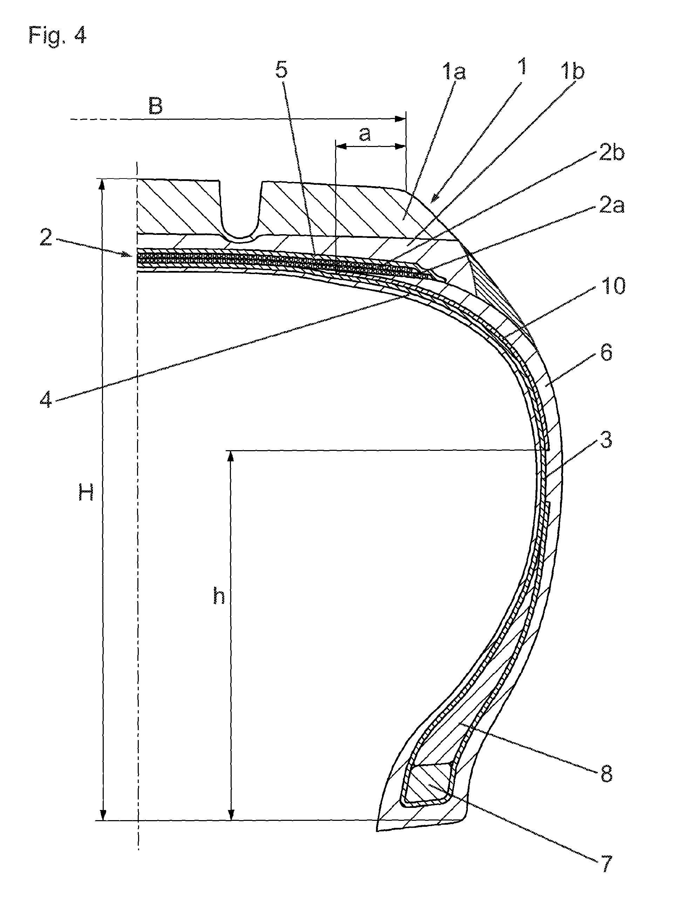

Fig. 1 bis Fig. 4 Querschnitte durch die eine Hälfte eines Fahrzeugluftreifens mit unterschiedlichen Ausführungsvarianten der Erfindung.

Die in den Zeichnungsfiguren gezeigten Fahrzeugluftreifen sind PKW-Radialreifen, welche jeweils eine profilierten Laufstreifen 1, einen hier aus zwei Lagen 2a, 2b bestehenden Gürtel 2, eine beispielhaft einlagig ausgeführte Radialkarkasse 3, eine luftdicht ausgeführte Innenschicht 4, zwei Seitenwände 6 sowie Wulstbereiche mit Wulstkernen 7 und Kernprofilen 8 aufweist. Die beiden Gürtellagen 2a, 2b bestehen jeweils aus in eine Gummimischung eingebetteten Festigkeitsträgern, insbesondere Stahlkorden, welche in jeder Lage parallel zueinander verlaufen, wobei die Festigkeitsträger in der einen Gürtellage 2a jene in der anderen Gürtellage 2b kreuzen. Der Winkel, den die Festigkeitsträger mit der Umfangsrichtung einschließen, beträgt in der Größenordnung von 15°bis 40°.

Der Laufstreifen 1 besteht bei den dargestellten Ausführungen aus einem Laufstreifencapteil 1a und einem Laufstreifenbasisteil 1 b aus unterschiedlichen Gummimischungen. Der Gürtel 2 ist radial außenseitig mit einer Bandage 5 abgedeckt, welche, wie es üblich ist, als Spulbandage ausgeführt ist. Die Bandage 5 besteht daher aus zumindest einem Bandagestreifen, welcher aus in eine Gummimischung eingebetteten, in Längsrichtung des Streifen verlaufenden, textilen oder metallischen Festigkeitsträgern besteht. Die Bandage 5 wird durch spiraliges Wickeln des oder der Streifen auf die beiden Gürtellagen 2a, 2b während des Aufbaus des Reifens aufgebracht. Mit B ist jene Breite bezeichnet, die sich in der Bodenaufstandfläche des Reifens einstellt, wenn sich der Reifen unter Nenndruck und Nennlast befindet.

Der Reifen ist im Bereich der beiden Reifenschultern und der an diese anschließenden Seitenwandbereiche jeweils durch einen in Umfangsrichtung umlaufenden Verstärkungsstreifen 10 versteift. Der Verstärkungsstreifen 10 erstreckt sich in Richtung Laufstreifenzenit und endet hier in einem Abstand a vom Laufstreifenrand, der zwischen 10 und 20% der Laufstreifenbreite B beträgt. In Richtung Seitenwand 6 reicht der Verstärkungsstreifen 10 bis auf eine Höhe h die zwischen 50 und 60% der Querschnittshöhe H des Reifens beträgt.

Die Verstärkungsstreifen 10 können aus einem gummierten Gewebe, welches aus Nylon, Rayon, Polyester oder anderen geeigneten textilen Faserkorden hergestellt ist, oder aus einer Gummimischung bestehen, die mit Kurzfasern aus den erwähnten Materialien verstärkt ist. Der Anteil an Fasern in der Gummimischung beträgt zwischen 10 und 30 Gewichtsteilen, bezogen 100 Gewichtsteile Kautschuk in der Ausgangsmischung. Die Gummimischung selbst kann eine auf Naturkautschuk oder einem anderen Polymer basierende Gummimischung mit einer Shore-Härte-A von 50 bis 70 sein.

Die Figuren 1 bis 4 zeigen unterschiedliche und bevorzugte Anordnungen der Verstärkungsstreifen 10 im Reifen. Bei der in Fig. 1 gezeigten Ausführungsform verläuft jeder Verstärkungsstreifen 10 in Kontakt mit der Außenseite der Bandage 5, einem zwischen der radial inneren Gürtellage 2a und der Karkasse 3 eingefügten keilförmigen Schulterstreifen 11 und der Karkasse 3. Bei der Herstellung bzw. dem Aufbau des Rohreifens werden die Verstärkungsstreifen 10 vor dem Auflegen des Laufstreifens 1 und der Seitenwand 6 auf die Bandage 5 und die Karkasse 3 aufgelegt.

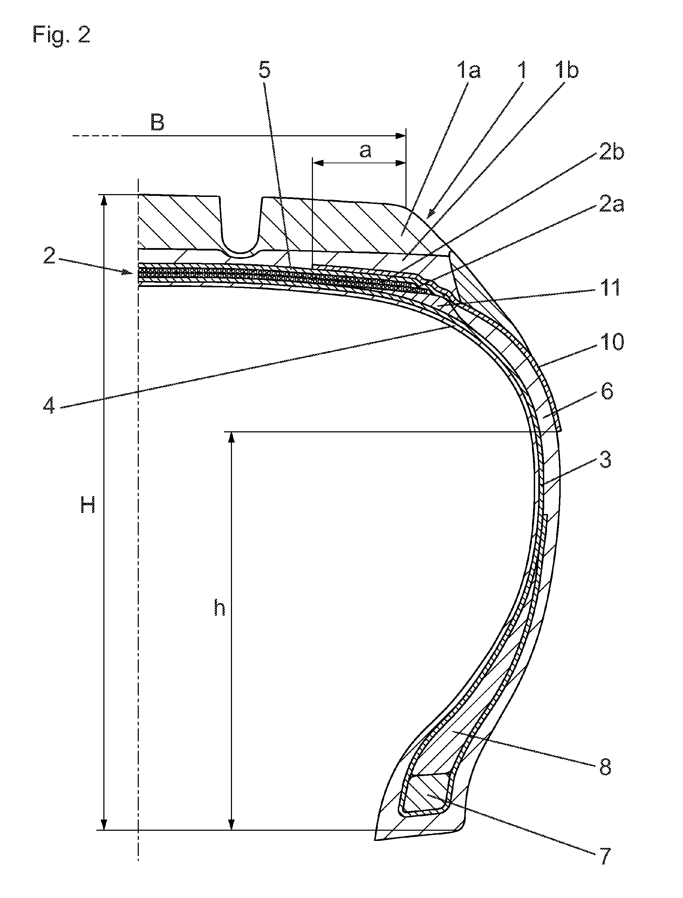

Bei der in Fig. 2 gezeigten Ausführungsvariante verläuft jeder Verstärkungsstreifen 10 in Kontakt mit der Bandage 5 und außenseitig der Seitenwand 6. Bei der Herstellung bzw. dem Aufbau des zugehörigen Rohreifens werden die Verstärkungsstreifen 10 vor dem Auflegen des Laufstreifens 1 auf die Bandage 5 und die Seitenwände 6 aufgelegt.

Fig. 3 zeigt eine Ausführungsform, bei welcher die Verstärkungsstreifen 10 an Stelle der Schulterstreifen, gegebenenfalls auch zusätzlich zu diesen, unmittelbar auf die Innenschicht 4 aufgelegt werden. Die Verstärkungsstreifen 10 befinden sich daher zwischen der Innenschicht 4 und der Karkasse 3.

Fig. 4 zeigt eine Ausführungsvariante, bei welcher die Verstärkungsstreifen 10 auf die Karkasse 3 aufgelegt sind und sich somit zwischen dieser und der jeweiligen Seitenwand 6 bzw. der radial inneren Gürtellage 2a befinden.

Die Verstärkungsstreifen 10 weisen eine Dicke zwischen 0,5 mm und 1,5 mm auf. An Stelle eines Verstärkungsstreifens 10 kann ein zweiter übereinstimmend oder abweichend ausgeführter Verstärkungsstreifen vorgesehen werden. Dabei können die Verstärkungsstreifen als aufeinander liegende Doppellagen eingebaut sein oder es können die dargestellten Anordnungen von Verstärkungsstreifen zweckmäßig kombiniert werden.

## Patentansprüche

1. Fahrzeugluftreifen mit einem Laufstreifen (1), einer Radialkarkasse (3), Wulstkernen (7) mit Kernprofilen (8), Seitenwänden (6), einem mehrlagigen Gürtel (2) und einer die radial äußerste Gürtellage (2b) abdeckenden, spiralig gewickelten Gürtelbandage (5), einer luftdichten Innenschicht (4) und mit sich über die Schulterbereiche erstreckenden Verstärkungsstreifen (10),
**dadurch gekennzeichnet,**
**dass** die Verstärkungsstreifen (10) über die Schulterbereiche hinaus verlaufend angeordnet sind und im Bereich des Laufstreifens (1) in einem vom jeweiligen Laufstreifenrand gemessen Abstand (a) von bis zu 25 % der Laufstreifenbreite (B) und im Bereich der Seitenwände (6) in einer Höhe (h) von 50 bis 60 % der Querschnittshöhe (H) des Reifens enden.

2. Fahrzeugluftreifen nach Anspruch 1, **dadurch gekennzeichnet, dass** die Verstärkungsstreifen (10) im Bereich des Laufstreifens (1) in einem vom jeweiligen Laufstreifenrand gemessenen Abstand (a) von mindestens 10 % der Laufstreifenbreite (B) enden.

3. Fahrzeugluftreifen nach Anspruch 1 oder 2, **dadurch gekennzeichnet, dass** der Verstärkungsstreifen (10) radial außenseitig und entlang der Bandage (5) und der Karkasse (3) verlaufend angeordnet ist.

4. Fahrzeugluftreifen nach Anspruch 1 oder 2, **dadurch gekennzeichnet, dass** der Verstärkungsstreifen (10) radial außenseitig und entlang der Bandage (5) und der Seitenwand (6) verlaufend angeordnet ist.

5. Fahrzeugluftreifen nach einem der Ansprüche 1 bis 4, **dadurch gekennzeichnet, dass** der Verstärkungsstreifen (10) radial außenseitig und entlang der Innenschicht (4) verlaufend angeordnet ist.

6. Fahrzeugluftreifen nach einem der Ansprüche 1 bis 4, **dadurch gekennzeichnet, dass** der Verstärkungsstreifen (10) radial außenseitig und entlang der Karkasse (3) verlaufend angeordnet ist.

7. Fahrzeugluftreifen nach einem der Ansprüche 1 bis 6, **dadurch gekennzeichnet, dass** der Verstärkungsstreifen (10) aus einem gummierten Gewebe aus textilen Faserkorden, beispielsweise aus Nylon, Rayon oder Polyester, besteht.

8. Fahrzeugluftreifen nach einem der Ansprüche 1 bis 6, **dadurch gekennzeichnet, dass** der Verstärkungsstreifen (10) aus faserverstärktem Gummi besteht.

9. Fahrzeugluftreifen nach Anspruch 8, **dadurch gekennzeichnet, dass** die Fasern aus Nylon, Rayon, Polyester oder anderen textilen Materialien bestehen.

10. Fahrzeugluftreifen nach Anspruch 8 oder 9, **dadurch gekennzeichnet, dass** der Anteil an Fasern zwischen 10 und 30 Gewichtsteilen, bezogen auf 100 Gewichtsteile Kautschuk in der Ausgangsmischung, beträgt.
